(19) Europäisches Patentamt / European Patent Office / Office européen des brevets

(11) **EP 3 443 560 B1**

(12) **FASCICULE DE BREVET EUROPEEN**

(45) Date de publication et mention
de la délivrance du brevet:
**04.03.2020 Bulletin 2020/10**

(21) Numéro de dépôt: **17716278.1**

(22) Date de dépôt: **13.04.2017**

(51) Int Cl.:
*G21C 7/12* (2006.01)   *G21C 7/18* (2006.01)
*G21C 7/36* (2006.01)   *G21C 9/00* (2006.01)
*G01R 23/00* (2006.01)   *H02P 8/28* (2006.01)
*G05B 19/00* (2006.01)

(86) Numéro de dépôt international:
**PCT/EP2017/058931**

(87) Numéro de publication internationale:
**WO 2017/178588 (19.10.2017 Gazette 2017/42)**

(54) **MÉCANISME D'ENTRAÎNEMENT D'ABSORBANTS DE CONTRÔLE DE RÉACTEUR NUCLÉAIRE, PROCÉDÉ DE SURVEILLANCE ET RÉACTEUR NUCLÉAIRE CORRESPONDANTS**

ANTRIEBSMECHANISMUS FÜR EINEN KERNREAKTORREGELSTAB SOWIE ENTSPRECHENDES ÜBERWACHUNGSVERFAHREN UND KERNREAKTOR

NUCLEAR-REACTOR CONTROL-ROD DRIVE MECHANISM AND CORRESPONDING MONITORING METHOD AND NUCLEAR REACTOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.04.2016 FR 1653366**

(43) Date de publication de la demande:
**20.02.2019 Bulletin 2019/08**

(73) Titulaire: **Société Technique pour l'Energie
Atomique
91190 Villiers Le Bacle (FR)**

(72) Inventeurs:
• **MATHIEU, Jérémy**
  **13100 AIX-EN-PROVENCE (FR)**
• **BRUN, Michel**
  **13109 SIMIANE-COLLONGUE (FR)**

(74) Mandataire: **Lavoix
2, place d'Estienne d'Orves
75441 Paris Cedex 09 (FR)**

(56) Documents cités:
EP-A2- 0 182 774   JP-A- H05 312 982
US-A- 4 034 277   US-A- 4 777 010

**Description**

L'invention concerne en général les mécanismes d'entraînement d'absorbants de contrôle d'un réacteur nucléaire.

Plus précisément, l'invention concerne selon un premier aspect un mécanisme d'entraînement d'au moins un absorbant de contrôle d'un réacteur nucléaire, le mécanisme étant du type comprenant :

- au moins un moteur électrique de type pas-à-pas comprenant un stator ayant au moins des première, seconde et troisième phases et un rotor ;
- une alimentation électrique, raccordée électriquement à chacune des première, seconde et troisième phases du stator ;
- une commande de l'alimentation électrique, programmée pour que l'alimentation électrique délivre à chacune des première, seconde et troisième phases des impulsions électriques à une fréquence courante, chaque impulsion électrique formant un pas de commande de forme adaptée à la commande du moteur, le rotor étant déplacé par unité de temps d'un nombre de pas de rotation fonction de ladite fréquence ;
- une chaîne cinématique agencée pour accoupler le rotor à l'absorbant de contrôle, la chaîne cinématique étant agencée pour convertir un mouvement de rotation du rotor en un mouvement de translation dudit absorbant de contrôle dans le cœur du réacteur, sans possibilité de glissement.

Les évènements d'extraction rapide d'un absorbant de contrôle sont parmi les principaux incidents de réactivité dans un réacteur nucléaire. Ces évènements peuvent entraîner une injection de réactivité dans le cœur du réacteur trop rapide pour être détectée par les chaînes de mesure neutronique et pour être traitée par le système de contrôle commande central avant qu'un accident de criticité intervienne.

Hors situation de maintenance, la principale cause d'un tel évènement est une défaillance de la commande du mécanisme d'entraînement ou du moteur électrique.

Il est important de noter que tout réacteur possède, du fait de sa conception, une marge d'anti-réactivité $\beta$ telle que l'injection d'une réactivité $\Delta\rho 0 < \beta$, dans un délai très court, voire même en échelon, ne provoque aucune conséquence neutronique critique.

En revanche, une injection de réactivité trop importante, quand elle dépasse $\beta$, provoque un emballement de la puissance neutronique très rapide et incontrôlable (passage en prompt criticité entraînant un doublement de la puissance neutronique en quelques millisecondes).

Du fait de l'importance des conséquences potentielles, il est nécessaire de mettre en place des dispositions de sûreté de niveau très élevé, si on veut exclure à la conception cet événement.

Par ailleurs, la rapidité avec laquelle peut se développer l'incident considéré rend difficile un contrôle a posteriori par observation du flux neutronique. Le temps nécessaire pour mettre en œuvre des mesures correctives sur détection d'une augmentation brusque du flux neutronique va de quelques secondes à plusieurs dizaines de seconde, ce qui est bien trop tardif.

Ce problème se pose avec une acuité particulière dans le cas d'un réacteur nucléaire conçu pour :

- exclure l'éjection des absorbants de contrôle sous l'effet de la poussée hydraulique du fluide primaire, par exemple en cas de rupture de la traversée de couvercle si le mécanisme d'entraînement est logé à l'extérieur de la cuve ;
- exclure la remontée mécanique de l'absorbant de contrôle, sur agression interne ou externe sans qu'un effort soit appliqué sur un mécanisme.

Les réacteurs intégrés de type SMR (Small and Modular Reactor, ou réacteur petit et modulaire) sont conçus de cette façon, en vue d'améliorer la sûreté. Typiquement, ils comportent des mécanismes d'entrainement immergés, dépourvus de traversée de couvercle. En conséquence, les injections de réactivité associées à des défaillances de la commande du mécanisme d'entrainement ne sont plus couvert par l'événement enveloppe d'éjection des grappes de contrôle.

Plusieurs solutions techniques existent pour maîtriser la vitesse de montée des absorbants de contrôle.

Une première possibilité est d'utiliser des mécanismes à cliquets. Ces mécanismes sont utilisés depuis longtemps, dans de nombreux réacteurs nucléaires. Ils limitent mécaniquement la vitesse de déplacement des absorbants. Une version immergée d'un mécanisme à cliquets est divulguée par US 2012/148007. De tels mécanismes immergés présentent des inconvénients importants : ils sont complexes mécaniquement, présentent un encombrement radial important.

Il est possible également d'utiliser des moteurs rotatifs à courant continu. La maîtrise de la vitesse nominale et de la survitesse de déplacement des absorbants est assurée par des dispositifs analogiques limitant la tension appliquée au moteur. Dans un tel mécanisme, la vitesse de montée de l'absorbant dépend du couple. En conséquence, le point de fonctionnement du mécanisme peut évoluer au cours du temps avec la tension, le rendement des réducteurs, les frottements etc. Il est ainsi nécessaire de prendre en compte une marge importante entre la vitesse nominale et la survitesse dans les études de sûreté, typiquement un facteur 3. Ceci est pénalisant pour le pilotage du réacteur.

Il est possible également d'utiliser des moteurs rotatifs à courant alternatif. Dans ce cas, la maîtrise de la survitesse est assurée par la garantie d'une fréquence du réseau parfaitement bornée, typiquement de 50 ou 60 hertz. Ceci pose problème dans certains pays ou pour certains sites, dans lesquels la fréquence du réseau n'est pas parfaitement maîtrisée.

Pour les deux types de mécanisme à moteur rotatif, le principe pour éviter l'événement considéré ci-dessus consiste à maîtriser la vitesse de montée des absorbants sur défaillance, et à vérifier que l'injection de réactivité associée $\Delta\rho 0$ pendant le délai de réaction des chaînes de contrôle de la réactivité du contrôle commande central du réacteur nucléaire, reste en deçà du seuil de prompte-criticité $\beta$, avec une marge significative correspondant aux options de conception.

Cette approche soulève deux problèmes.

La vitesse réelle de montée des absorbants est dépendante du rapport entre le couple moteur et le couple résistant, et est donc une fonction complexe de multiples paramètres : masse, rendement des réducteurs, frottement, tension d'alimentation etc.

Ces paramètres sont évolutifs dans le temps. Il est ainsi nécessaire de prendre des marges de sécurité qui pénalisent la capacité à concilier une vitesse de descente rapide, et une vitesse de montée maximale limitée.

Par ailleurs, quand le flux neutronique est faible, le délai de réponse des chaînes du contrôle commande central est élevé. Ce délai de réponse va typiquement de plusieurs secondes à plusieurs dizaines de secondes.

JP H05-312982 divulgue un mécanisme d'entrainement d'un absorbant de contrôle comportant un moteur pas à pas. Le mécanisme d'entrainement comprend un dispositif comptant le nombre d'impulsions de commande envoyées au générateur PWM.

Enfin, on connait de US 4 777 010 un mécanisme d'entraînement d'au moins un absorbant de contrôle dans lequel l'absorbant est déplacé par un moteur électrique de type pas à pas.

Dans ce contexte, l'invention vise à proposer un mécanisme d'entraînement qui ne présente pas les défauts évoqués ci-dessus.

A cette fin, l'invention porte sur un mécanisme d'entraînement du type précité, caractérisé en ce que le mécanisme d'entraînement comprend un dispositif de surveillance d'une situation potentielle de montée en survitesse de l'absorbant, le dispositif de surveillance comprenant au moins deux unités de surveillance indépendantes l'une de l'autre, chacune connectée aux bornes de l'une des première, seconde et troisième phases, chaque unité de surveillance étant configurée pour :

- mesurer le nombre de pas de commande délivrés à ladite phase pendant une fenêtre de temps de durée prédéterminée ou le nombre de pas de rotation du rotor pendant une fenêtre de temps de durée prédéterminée ;
- comparer le nombre de pas de commande mesurés avec un maximum prédéterminé ou le nombre de pas de rotation mesurés avec un maximum prédéterminé.

Dans un moteur pas à pas, tout évènement affectant le couple moteur (tension appliquée, courant ...) et/ou le couple résistant (modification du rendement de la chaîne cinématique, phénomène hydraulique intervenant à l'intérieur de la cuve du réacteur, ...) a une conséquence seulement sur la vitesse de réalisation d'un seul pas. En revanche, la vitesse macroscopique sur plusieurs pas ne dépend que de la fréquence de la commande, pour autant que celle-ci reste suffisamment faible pour que le moteur ne décroche pas.

Par construction, le moteur ne peut donc pas tourner plus vite que la fréquence imposée par la commande, au-delà, au pire, de quelques pas du moteur. La chaine cinématique, de plus, est conçue pour accoupler le moteur à l'absorbant sans possibilité de glissement. En conséquence, la fréquence des impulsions électriques est de manière sûre une image majorante de la vitesse moyenne de montée de l'absorbant sur plusieurs pas. Le nombre d'impulsions électriques délivrées à chaque phase pendant une fenêtre de temps de durée prédéterminée, ou le nombre de pas de rotation du rotor pendant la fenêtre de temps de durée prédéterminée, constitue donc une indication sûre, majorante, du déplacement de l'absorbant. Si ce nombre d'impulsion électrique ou ce nombre de pas dépasse un maximum prédéterminé, on a une présomption de rotation trop rapide du moteur et donc de vitesse trop élevée de montée de l'absorbant.

Une telle approche permet une action de sûreté en boucle courte, du fait qu'on mesure un paramètre représentatif de la commande, et non pas l'évolution effective de la puissance neutronique. L'action de sûreté peut être réalisée dans un temps très court au regard des vitesses d'injection opérationnelles de réactivité. Ainsi, il est possible d'interrompre l'alimentation électrique du moteur en quelques centaines de millisecondes.

La réactivité totale injectée avant coupure de l'alimentation électrique est donc peu dépendante des hypothèses faites sur les vitesses maximales de mouvement possibles à la montée ou la descente, et dégage donc de larges marges dans la définition de la motorisation, comme exposé plus loin.

Le mécanisme d'entraînement peut en outre représenter une ou plusieurs des caractéristiques ci-dessous, considérées individuellement ou selon toutes les combinaisons techniquement possibles :

- le dispositif de surveillance comprend au moins des première, seconde et troisième unités de surveillance indépendantes les unes des autres, connectées aux bornes respectivement des première, seconde et troisième phases, la première unité et la seconde unité étant chacune configurée pour mesurer le nombre de pas de commande pendant la fenêtre de temps de durée prédéterminée, et couper l'alimentation électrique en cas de dépassement du maximum prédéterminé ;
  la troisième unité étant configuré pour mesurer le nombre de pas de rotation du rotor pendant la fenêtre de temps de durée prédéterminée, et couper l'alimentation électrique en cas de dépassement du maximum prédéterminé ;
- les première et seconde unités comportent chacune au moins l'un des circuits suivants :

  * un circuit logique configuré pour compter le nombre d'impulsions électriques délivrées respectivement à la première phase ou à la deuxième phase ;
  * un circuit analogique configuré pour compter le nombre d'impulsions électriques délivrées respectivement à la première phase ou à la deuxième phase ;
  * un circuit logique ou analogique de comparaison des impulsions électriques délivrées respectivement à la première phase ou à la deuxième phase avec un gabarit prédéterminé ;

- la troisième unité est configurée pour détecter le franchissement d'un pas de rotation par le rotor par mesure d'impédance aux bornes de la troisième phase du stator ;
- le dispositif de surveillance comprend, en complément des première et seconde unités de surveillance, une première et/ou une seconde unité de mesure configurée pour mesurer une impédance aux bornes de la première ou deuxième phase respectivement, et une unité utilisant la mesure d'impédance aux bornes d'au moins deux des première, deuxième et troisième phases pour déterminer la position de l'absorbant ;
- les première, seconde et troisième unités sont configurées pour couper l'alimentation électrique en agissant respectivement sur des premier, second et troisième interrupteurs indépendants les uns des autres si le nombre de pas de commande ou le nombre de pas de rotation dépasse le maximum prédéterminé correspondant ;
- la chaîne cinématique est configurée pour que le nombre maximum d'impulsions électriques ou de pas de rotation entraîne un apport de réactivité inférieur à une limite d'anti-réactivité (β) excluant un accident de prompte criticité prédéterminée du réacteur, moins une marge prédéterminée par des analyses de sûreté ; et
- la chaîne cinématique assure le maintien de position même sur coupure de l'alimentation du moteur.

Selon un second aspect, l'invention porte sur un procédé de surveillance d'une situation potentielle de montée en survitesse d'un absorbant de contrôle d'un réacteur nucléaire équipé d'un mécanisme d'entraînement dudit absorbant de contrôle comprenant :

- au moins un moteur électrique de type pas-à-pas comprenant un stator ayant au moins des première, seconde et troisième phases et un rotor ;
- une alimentation électrique, raccordée électriquement à chacune des première, seconde et troisième phases du stator ;
- une commande de l'alimentation électrique, programmée pour que l'alimentation électrique délivre à chacune des première, seconde et troisième phases des impulsions électriques à une fréquence courante, chaque impulsion électrique formant un pas de commande de forme adaptée à la commande du moteur, le rotor étant déplacé par unité de temps d'un nombre de pas de rotation fonction de ladite fréquence ;
- une chaîne cinématique agencée pour accoupler le rotor à l'absorbant de contrôle, la chaîne cinématique étant agencée pour convertir un mouvement de rotation du rotor en un mouvement de translation dudit absorbant dans le cœur du réacteur, sans possibilité de glissement ;

le procédé comprenant au moins deux étapes de surveillance indépendantes l'une de l'autre, chaque étape de surveillance comprenant les opérations suivantes :

- mesurer aux bornes de l'une des première, deuxième et troisième phases le nombre de pas de commande délivrés à ladite phase pendant une fenêtre de temps de durée prédéterminée ou le nombre de pas de rotation du rotor pendant une fenêtre de temps de durée prédéterminée ;
- comparer le nombre de pas de commande mesurés avec un maximum prédéterminé ou le nombre de pas de rotation mesurés avec un maximum prédéterminé.

Le procédé de surveillance peut en outre représenter une ou plusieurs des caractéristiques ci-dessous :

- le procédé de surveillance comprend :

    * des première et seconde étapes de surveillance pendant lesquelles respectivement le nombre de pas de commande délivrés aux première et seconde phases pendant la fenêtre de temps de durée prédéterminée est mesuré aux bornes de ladite phase, l'alimentation électrique étant coupée en cas de dépassement du maximum prédéterminé ;
    * une troisième étape de surveillance pendant laquelle le nombre de pas de rotation du rotor pendant la fenêtre de temps de durée prédéterminée est mesuré aux bornes de la troisième phase, l'alimentation électrique étant coupée en cas de dépassement du maximum prédéterminé ;.

- aux première et seconde étapes de surveillance, le nombre de pas de commande respectivement délivrés à la première phase et à la seconde phase est compté en détectant les fronts de tension ou les fronts de courant ;
- à la troisième étape de surveillance, le nombre de pas de rotation du rotor est compté en mesurant une impédance aux bornes de la troisième phase ;
- le procédé comprend, en plus des première et seconde étapes de surveillance, une première et/ou une seconde étape de mesure pendant lesquelles respectivement le nombre de pas de rotation du rotor est compté en mesurant une impédance aux bornes de la première et deuxième phase, le procédé comprenant une étape de détermination de la position de l'absorbant utilisant la mesure d'impédance aux bornes d'au moins deux des première, deuxième et troisième phases ;
- au cours des première, seconde et troisième étapes, l'alimentation électrique du moteur électrique est coupée en agissant respectivement sur des premier, second et troisième interrupteurs indépendants les uns des autres si le nombre d'impulsion électrique ou le nombre de pas de rotation dépasse le maximum prédéterminé correspondant et
- la chaîne cinématique est configurée pour que le nombre maximum d'impulsions électriques ou de pas de rotation entraîne un apport de réactivité inférieur à une limite d'anti-réactivité excluant un accident de prompte criticité prédéterminée du réacteur moins une marge prédéterminée par les analyses de sûreté.

Selon un troisième aspect, l'invention porte sur un réacteur nucléaire équipé de mécanismes d'entraînement d'absorbants de contrôle ayant les caractéristiques ci-dessus.

D'autres caractéristiques et avantages de l'invention ressortiront de la description détaillée qui en est donnée ci-dessous, à titre indicatif et nullement limitatif, en référence aux figures annexées, parmi lesquelles :

- la figure 1 est une représentation schématique d'un mécanisme d'entraînement d'un absorbant de contrôle d'un réacteur nucléaire conforme à un premier mode de réalisation de l'invention ;
- la figure 2 est une représentation schématique de la première unité du dispositif de surveillance du mécanisme de la figure 1 ;
- la figure 3 illustre la forme des signaux électriques aux points a et b de la première unité représentée sur la Figure 2;
- la figure 4 est une représentation schématique de la seconde unité du dispositif de surveillance de la figure 1 ;
- la figure 5 représente la forme des signaux électriques aux points a, b et c de la seconde unité représentée sur la figure 4 ;
- la figure 6 est une représentation schématique de la troisième unité du dispositif de surveillance de la figure 1 ; et
- la figure 7 est une représentation schématique similaire à celle de la figure 1, pour un second mode de réalisation de l'invention qui comporte une unité de détermination de la position de l'absorbant.

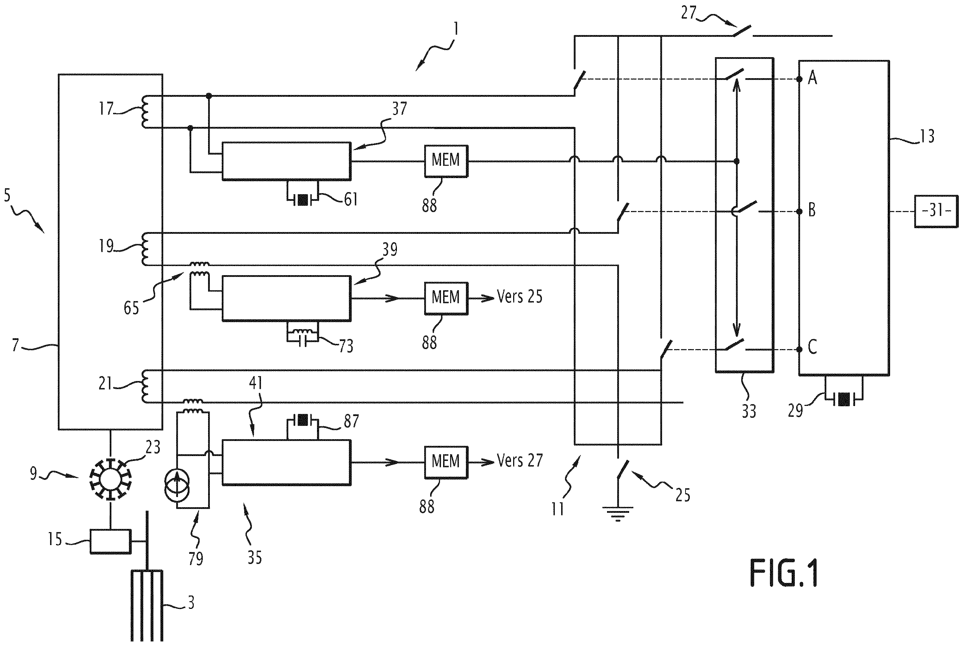

Le mécanisme d'entraînement 1 représenté sur la figure 1 est destiné à déplacer un absorbant 3 de contrôle d'un réacteur nucléaire.

Un réacteur nucléaire comporte typiquement une cuve et un cœur disposé dans la cuve. Le cœur comporte une pluralité d'assemblages de combustible nucléaire. Le réacteur nucléaire comporte encore un grand nombre d'absorbants de contrôle, déplaçables dans le cœur du réacteur nucléaire de manière à contrôler le flux neutronique émis par les assemblages de combustible nucléaire. Ces absorbants sont désignés par exemple sous le nom de grappes de contrôle ou « control rod ». Ils sont réalisés en un matériau absorbant les neutrons.

Chaque absorbant de contrôle est associé à un mécanisme d'entraînement, qui est prévu pour déplacer l'absorbant par rapport aux assemblages de combustible suivant une direction généralement verticale.

Le réacteur nucléaire est typiquement un réacteur à eau sous pression (PWR en anglais), ou un réacteur à eau bouillante (BWR en anglais).

En variante, il est de tout autre type adapté.

Par exemple, le réacteur nucléaire est de type SMR.

Typiquement, ce réacteur nucléaire est du type excluant par conception l'éjection des absorbants sous l'effet de la poussée hydraulique du fluide primaire, et la remontée mécanique sur agression interne ou externe sans qu'un effort soit appliqué au mécanisme. De préférence, le réacteur est du type dépourvu de traversée de couvercle, les mécanismes d'entraînement étant entièrement immergés dans la cuve.

Comme illustré sur la figure 1, le mécanisme 1 comprend au moins un moteur électrique 5 de type pas à pas pourvu d'un stator 7 et d'un rotor 9, une alimentation électrique 11, une commande 13 de l'alimentation électrique 11, et une chaîne cinématique 15 agencée pour accoupler le rotor 9 à l'absorbant de contrôle 3, sans possibilité de glissement.

Typiquement, le mécanisme 1 comporte un moteur électrique unique pour chaque absorbant 3.

Les moteurs de type pas à pas sont connus et ne seront donc pas décrits en détail ici. Le moteur électrique 5 est de tout type adapté, par exemple est un moteur à reluctance variable, ou un moteur à aimant permanent ou un moteur hybride.

Le stator 9 comporte au moins trois phases 17, 19, 21, ou plus de trois phases.

Le rotor 9 comporte une pluralité de dents 23.

L'alimentation électrique 11 est raccordée électriquement à chacune des phases du stator 7, notamment aux première, seconde et troisième phases 17, 19 et 21.

La commande 13 est programmée pour que l'alimentation électrique 11 délivre à chacune des première, seconde et troisième phases 17, 19, 21 des impulsions électriques à une fréquence courante. Chaque impulsion électrique forme un pas de commande, de forme adaptée à la commande du moteur. Les impulsions électriques sont par exemple des créneaux comme représenté sur les figures, mais en variante ont des formes différentes de créneaux.

Typiquement, la commande 13 est programmée pour que l'alimentation électrique délivre des impulsions électriques successivement aux première, deuxième et troisième phases 17, 19, 21. Chaque impulsion électrique provoque typiquement le déplacement en rotation du rotor. Le nombre de pas de commande, c'est-à-dire le nombre d'impulsions nécessaire pour effectuer un tour complet de rotor, dépend du nombre de phases, du nombre de dents 23, et de la forme de la commande.

Le pas de rotation du rotor est lié au pas de commande par une relation fixe ne dépendant que de la structure du moteur : nombre de dents 23 du rotor, nombre de phases (ici 3) et nombre de bobines par phase. Typiquement, un pas de commande entraîne le rotor en rotation sur un pas de rotation. Le nombre de pas de commande est donc théoriquement égal au nombre de pas de rotation du rotor. En variante, par exemple pour des commandes complexes, un pas de commande entraîne le rotor en rotation sur plus ou moins d'un pas de rotation. Le nombre de pas de commande n'est pas égal au nombre de pas de rotation du rotor.

Ainsi, le rotor 9 est déplacé en rotation par unité de temps d'un nombre de pas de rotation qui est fonction de la fréquence courante.

La chaîne cinématique 15 est agencée pour convertir le mouvement de rotation du rotor 9 en un mouvement de translation de l'absorbant 3 dans le cœur du réacteur. Elle est de tout type adaptée pour ne pas permettre de glissement (ex. vis/écrou).

De préférence, la chaîne cinématique 15 assure le maintien en position de l'absorbant sans qu'il soit nécessaire de maintenir un couple moteur. Typiquement, si l'alimentation électrique 11 du moteur est coupée, l'absorbant de contrôle 3 reste en place et n'est pas entraîné vers le bas par son poids. Plusieurs solutions typiques existent pour réaliser cette propriété. Par exemple, en prévoyant dans la chaîne cinématique 15 un organe d'entraînement de type vis/écrou, avec un pas choisi pour être irréversible. Une autre solution est l'ajout dans la chaine cinématique d'un frein (par exemple à frottement ou frein à hystérésis).

L'alimentation électrique 11 comporte des premier et second sectionneurs 25 et 27. Le moteur électrique 5 est alimenté électriquement quand les premier et second sectionneurs 25, 27 sont en position fermée. La transmission de puissance électrique vers le moteur 5 est interrompue si l'un ou l'autre des sectionneurs est ouvert.

Les premier et second sectionneurs 25, 27 sont indépendants l'un de l'autre et de technologies différentes l'un de l'autre. Ils sont normalement toujours fermés. Par exemple, le premier sectionneur 25 est un relais à manque de tension, et le second sectionneur 27 est un interrupteur statique.

La commande 13 est typiquement de conception conventionnelle. Elle comporte une base de temps propre 29, permettant de calibrer la durée et la fréquence de répétition des impulsions délivrées par l'alimentation électrique 11 aux première, seconde et troisième phases 17, 19, 21. La commande 13 reçoit des ordres opérationnels d'un organe de pilotage 31, commandant de monter ou de descendre l'absorbant de contrôle 3. La commande 13 convertit ces ordres opérationnels en impulsions électriques de commande de formes et de fréquences adaptées pour chacune des première, seconde et troisième phases 17, 19, 21 du stator.

Le mécanisme 1 comporte encore un dispositif d'inhibition 33 interposé entre la commande 13 et l'alimentation électrique 11. Le dispositif 33 est configuré pour inhiber la transmission des commandes depuis la commande 13 vers l'alimentation électrique 11 dans des conditions déterminées demandant la coupure d'alimentation du moteur 5.

Le mécanisme d'entraînement 1 comprend un dispositif 35 de surveillance d'une situation de montée potentielle en survitesse de l'absorbant de contrôle 3. Le dispositif de surveillance 35 comprend au moins deux unités de surveillance indépendantes l'une de l'autre, chacune connectée aux bornes de l'une des première, seconde et troisième phases 17, 19, 21, chaque unité de surveillance étant configurée pour :

- mesurer le nombre de pas de commande délivrés à ladite phase 17, 19, 21 pendant une fenêtre de temps Tobs de durée déterminée, ou mesurer le nombre de pas de rotation du rotor 9 pendant une fenêtre de temps de durée prédéterminée T'obs ;
- comparer le nombre de pas de commande mesurés avec un maximum Nmax prédéterminé, ou comparer le nombre de pas de rotation mesurés avec un maximum N'max prédéterminé.

Comme expliqué plus haut, le nombre d'impulsions électriques délivrées à chaque phase est une image majorante du déplacement de l'absorbant de contrôle dans le cœur du réacteur. Le dispositif de surveillance déclare une présomption de vitesse excessive de montée de la grappe si le nombre d'impulsions électriques, ou le nombre de pas de rotation du rotor, dépasse le maximum prédéterminé correspondant.

De préférence, et comme illustré sur la figure 1, le dispositif de surveillance 35 comprend au moins des première, seconde et troisième unités de surveillance 37, 39, 41, indépendantes physiquement et fonctionnellement les unes des autres, connectées aux bornes respectivement des première et seconde et troisième phases 17, 19 et 21.

La première unité 37 est configurée pour mesurer le nombre d'impulsions électriques délivrées à la première phase 17 pendant la fenêtre de temps Tobs de durée prédéterminée, et couper l'alimentation électrique 11 en cas de dépassement du maximum prédéterminé Nmax. Pour ce faire, la première unité 37 est configurée avantageusement pour comparer ce nombre d'impulsions électriques mesurées avec le maximum prédéterminé Nmax.

De même, la seconde unité 39 est configurée pour mesurer le nombre d'impulsions électriques délivrées à la seconde phase 19 pendant la fenêtre de temps Tobs de durée prédéterminée, et couper l'alimentation électrique 11 en cas de dépassement du maximum prédéterminé Nmax. Pour ce faire, la seconde unité 39 est configurée avantageusement pour comparer le nombre d'impulsions électriques mesurées avec le maximum prédéterminé Nmax .

La troisième unité 41 est configurée pour mesurer le nombre de pas de rotation du rotor 9 pendant la fenêtre de temps de durée prédéterminée T'obs et couper l'alimentation électrique 11 en cas de dépassement du maximum prédéterminé N'max. Pour ce faire, la troisième unité 41 est configurée avantageusement pour comparer le nombre de pas de rotation mesuré avec le maximum prédéterminé N'max.

Ainsi, le dispositif de surveillance comporte au moins deux, de préférence trois, unités redondantes, indépendantes les unes des autres, chacune capable de détecter l'apparition d'un nombre excessivement grand d'impulsions de commande dans la fenêtre de temps, ou un nombre excessivement grand de pas de rotation du rotor dans la fenêtre de temps donnée.

Les trois unités 37, 39, 41 sont de technologies différentes, et possèdent chacune une base de temps propre.

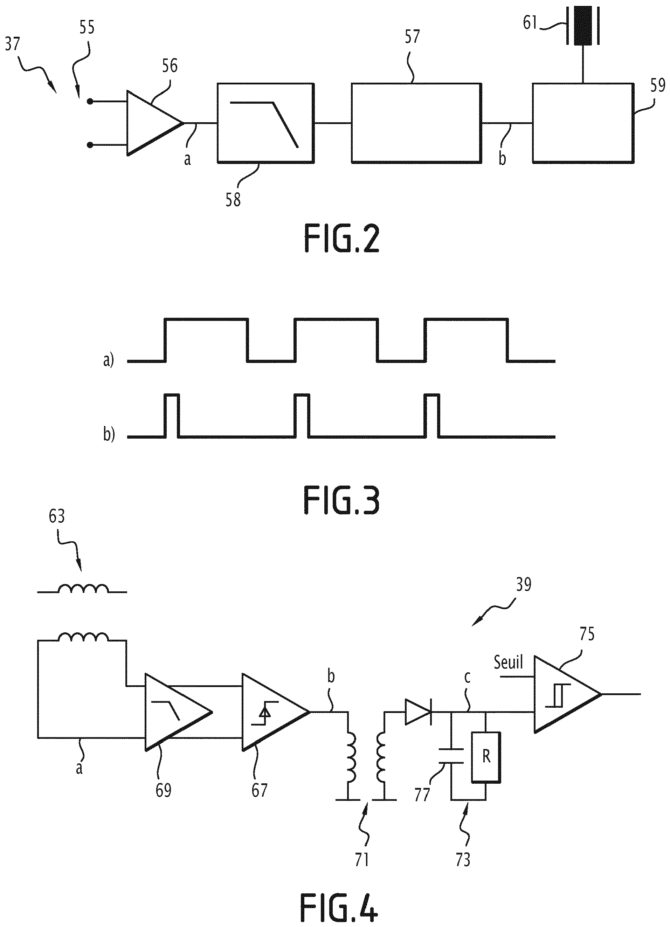

La première unité 37 est représentée sur la figure 2. Elle comporte un circuit logique configuré pour compter le nombre d'impulsions électriques délivrés à la première phase 17. Elle travaille sur la tension des impulsions électriques délivrées à la première phase 17.

La première unité 37 présente une entrée 55 branchée aux bornes de la première phase 17. Le signal reçu à l'entrée 55, représenté sur la ligne supérieure de la figure 3, est dirigé vers un amplificateur 56, qui permet de mettre en forme le signal mesuré aux bornes de la première phase 17. La première unité de mesure 37 comporte un détecteur de front montant 57. Un filtre passe bas 58 est interposé entre la sortie de l'amplificateur 56 et l'entrée du détecteur 57.

Le détecteur 57 détecte les fronts montants des impulsions électriques délivrées par l'alimentation électrique à la première phase 17. Il est de tout type adapté, et utilise par exemple le schéma classique combinant un signal avec un signal retardé. Le signal de sortie du détecteur 57 est illustré sur la ligne inférieure de la figure 3.

La première unité 37 en variante ne comporte pas l'amplificateur 56 et/ou le filtre passe bas 58.

La première unité 37 comporte un décompteur logique d'impulsion 59. La sortie du détecteur de front montant 57 est raccordée au décompteur 59. Celui-ci est raccordé par ailleurs à une base temps propre à cette unité 37, par exemple un oscillateur 61.

Le décompteur 59 est rechargé à la valeur Nmax périodiquement, les rechargements étant séparés par une période Tobs. La valeur du décompteur 59 est diminuée de 1 à chaque fois que le détecteur 57 détecte un front montant, c'est-à-dire détecte une impulsion électrique délivrée à la première phase. La première unité 37 coupe l'alimentation électrique du moteur si le décompteur 59 arrive à zéro.

Le décompteur 59 est par exemple un circuit logique de type 74HC590, mettant en œuvre des compteurs binaires de type 74HC59.

La seconde unité 39 est représentée sur la figure 4. Elle comporte un circuit analogique configuré pour compter le nombre d'impulsions électriques délivrées à la seconde phase 19. Typiquement, la seconde unité 39 travaille sur le courant, c'est-à-dire l'intensité des impulsions électriques délivrées à la seconde phase. En variante, elle peut comme la première unité 37 travailler en tension.

Plus précisément, la seconde unité 39 fonctionne par détection analogique de front dans le courant de commande alimentant la seconde phase 19, à l'aide d'amplificateurs opérationnels. La base de temps est fournie par le bilan de charge décharge d'une capacité.

La seconde unité 39 présente une entrée 63 réalisée typiquement par un transformateur de courant.

La seconde unité 39 comporte encore un détecteur de front montant 67. Ce détecteur est par exemple un amplificateur monté en comparateur à une valeur choisie pour détecter de manière franche le basculement de commande, c'est-à-dire les fronts montants de courant.

Un filtre passe bas 69 est interposé avant le détecteur 67.

La seconde unité 39 en variante ne comporte pas le filtre passe bas 69.

La seconde unité 39 comporte un transformateur d'impulsions 71, dont l'entrée est raccordée à la sortie du détecteur 67. Le transformateur d'impulsion 71 charge avec une valeur connue un circuit RC 73 servant de base de temps. Le circuit RC 73 est par ailleurs raccordé à l'entrée d'un amplificateur 75 monté en comparateur.

L'amplificateur 75 est monté de manière à comparer la charge moyenne de la capacité 77 du circuit RC à un seuil prédéterminé.

Si le nombre d'impulsions délivrées par le transformateur d'impulsions 71 par unité de temps, c'est-à-dire si le nombre de fronts montants détectés par le détecteur 67 est suffisamment faible par unité de temps, la capacité 77 se décharge suffisamment entre deux impulsions pour que sa charge moyenne reste inférieure au seuil. Dans le cas contraire, la charge de la capacité augmente progressivement jusqu'à dépasser le seuil. L'amplificateur 75 envoie alors un signal commandant de couper le moteur électrique 5.

La seconde unité 39 est agencée de telle sorte que si un nombre Nmax de fronts montants est détecté pendant la fenêtre de temps Tobs, alors la charge de la capacité 77 dépasse le seuil prédéterminé.

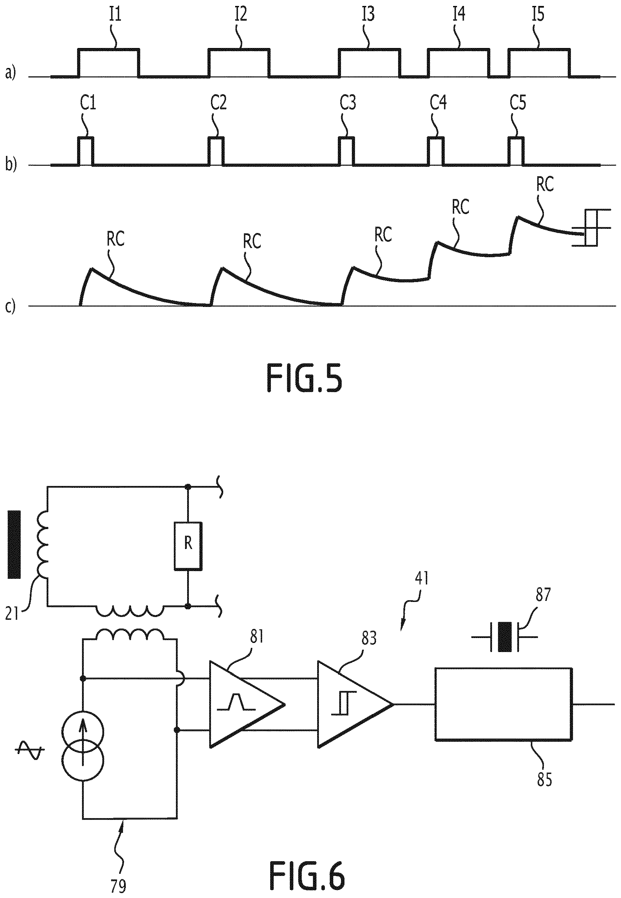

La forme du courant délivrée par l'alimentation électrique à la seconde phase 19 en fonction du temps est représentée sur la ligne supérieure de la figure 5. Dans l'exemple représenté, les trois premières impulsions I1, I2 et I3 sont relativement espacées dans le temps. En revanche, la quatrième impulsion I3 est relativement rapprochée de la troisième impulsion et la cinquième impulsion I5 est également relativement rapprochée de la quatrième impulsion I4. La seconde ligne de la figure 5 illustre le signal en sortie du détecteur 67, en fonction du temps. On voit que le détecteur 67 a détecté cinq fronts montants, représentés par les créneaux C1 à C5. La charge de la capacité 77 en fonction du temps est représentée sur la ligne inférieure de la figure 5. On voit que la charge de la capacité 77 augmente à chaque fois que le détecteur 67 envoie un créneau au transformateur d'impulsions 71. Il apparait sur la figure 5 que, après l'apparition du premier ou second créneau C1, C2, la capacité a le temps de se décharger entièrement avant l'apparition du créneau suivant. En revanche, du fait que les créneaux C3, C4 et C5 sont relativement plus rapprochés entre eux, la capacité 77 n'est pas entièrement déchargée quand le créneau suivant apparait. Sa capacité augmente donc graduellement, comme illustré sur la figure 5, quand plusieurs impulsions se succèdent avec un intervalle de temps rapproché entre eux. Après l'apparition du créneau C5, la charge de la capacité 77 dépasse le seuil prédéterminé.

D'autres méthodes de surveillance des signaux de commande sont possibles en remplacement et/ou complément des solutions décrites précédemment pour les unités de surveillance 37 et 39. Par exemple, la surveillance repose sur la comparaison du signal de commande avec un gabarit de tension ou de courant prédéterminé. Cette méthode est typiquement adoptée quand la forme des signaux de commande du moteur est complexe.

Le principe est d'assurer la comparaison du signal de commande avec des enveloppes minimales/maximales assurant par exemple le respect de la durée de plateau à tension haute ou basse.

Selon cette méthode, on compare par exemple la durée pendant laquelle la tension du signal de commande est supérieure à un seuil, ou inférieure à un seuil, ou compris entre deux seuils, avec des valeurs prédéterminées.

Cette méthode permet donc de détecter la fréquence des plateaux hauts ou bas, et donc la fréquence des pas de commande.

La troisième unité 41 est configurée pour mesurer une impédance aux bornes de la troisième phase 21. Cette impédance est différente selon qu'une dent 23 du rotor est présente face à la bobine ou à une des bobines de la phase 21, ou selon qu'aucune des dents 23 n'est située en face de la bobine ou d'une des bobines de la phase 21. La troisième unité 41 permet donc de détecter l'apparition d'une dent 23 du rotor face à une bobine de la phase 21, cette d'apparition de dent étant l'image de la réalisation effective d'un pas de rotation du rotor. La troisième unité 41 permet donc de compter directement le nombre de pas de rotation du rotor pendant la fenêtre de temps de durée prédéterminée T'obs.

Comme représenté sur la figure 6, la troisième unité 41 comporte une source 79 prévue pour injecter un signal alternatif aux bornes de la troisième phase 21. Ce signal alternatif est superposé à la commande délivrée par l'alimentation 11 à la troisième phase 21. Sur la figure 6, cette source est représentée comme injection de courant, mais d'autres solutions sont possibles. Elle présente une fréquence beaucoup plus élevée que celle de la commande fournie par l'alimentation électrique 11, par exemple au moins cinq fois plus élevée, typiquement dix fois plus élevée. Le signal alternatif injecté présente un faible niveau de puissance, et est typiquement injecté par un transformateur ou une capacité.

La troisième unité 41 comporte par ailleurs un filtre passe bande 81 recevant en entrée le signal sortant de la troisième phase 21, dont la composante alternative à la fréquence d'injection dépend de l'impédance liée à la présence d'une dent ou non en face de(s) bobine(s) de la phase 21.

Le filtre passe bande 81 est centré sur la fréquence du signal alternatif injecté.

La troisième unité 41 comporte encore un organe 83 de mesure de la tension, dans la bande de fréquence sélectionnée par le filtre passe bande, qui donne une image de l'inductance de la troisième phase. L'inductance est élevée si une dent du rotor est en face de la ou d'une bobine du stator, et est faible si aucune dent du stator n'est en face d'une bobine de la troisième phase 21. Le signal en sortie de l'organe 83 est un signal binaire, valant 1 si une dent 23 est en face d'une bobine et 0 sinon.

La troisième unité 41 comporte un décompteur logique d'impulsion 85, réalisant une fonction similaire à celle décrite pour la première unité. De préférence, il est de technologie différente de celui de la première unité.

Le décompteur 85 est rechargé à une valeur N'max tous les T'obs en fonction d'une base temps propre à cette unité 41, par exemple fournie par un quartz local 87. A chaque passage d'une dent détectée par la sous-unité de mesure 51, la valeur du décompteur 85 est diminuée de 1. Le décompteur 85 envoie un signal provoquant l'arrêt du moteur 5 si sa valeur arrive à 0 avant le rechargement.

Les première, seconde et troisième unités 37, 39 et 41 sont configurées pour couper l'alimentation électrique du moteur en agissant respectivement sur des premier, second et troisième interrupteurs indépendants les uns des autres si le nombre d'impulsions électriques ou le nombre de pas de rotation dépasse le maximum prédéterminé correspondant.

Dans l'exemple représenté, la première unité 37 agit sur le dispositif d'inhibition 33. La seconde unité 39 agit sur le sectionneur 25. La troisième unité 41 agit sur le sectionneur 27.

Chacune des première, seconde et troisième unités 37, 39, 41 comporte une mémorisation 88 de déclenchement, réarmé par le système de contrôle commande central du réacteur. Cette mémorisation est par exemple intégrée dans les interrupteurs 33, 25, 27. Cette mémorisation permet qu'un ordre de coupure soit irréversible jusqu'à réarmement volontaire, typiquement par le contrôle-commande centralisé et/ou l'opérateur, après diagnostic des causes ayant provoqué cet ordre.

Un aspect important de l'invention est que la chaîne cinématique 15 est configurée pour que le nombre maximum Nmax d'impulsions électriques ou le nombre maximum N'max de pas de rotation entraînent un apport de réactivité dans le cœur inférieur à la limite d'anti-réactivité $\beta$ prédéterminée du réacteur, avec une marge prédéterminée par des analyses de sûreté. Cette marge est par exemple de 10% de $\beta$.

En effet, le nombre maximum d'impulsions électriques correspond à un nombre maximum de pas de rotation du rotor, qui correspond lui-même à un déplacement de l'absorbant de contrôle dans le cœur qui est fonction des caractéristiques de la chaîne cinématique. Par exemple, pour une chaîne cinématique de type vis/écrou, le déplacement de l'absorbant de contrôle au sein du cœur pour un pas de rotor est fonction du pas de vis.

Un exemple de dimensionnement du mécanisme d'entraînement va maintenant être décrit.

La réactivité est usuellement mesurée en pcm (pour cent mille), unité représentant l'évolution de la population neutronique.

La vitesse de remontée de l'absorbant de contrôle 3 est fixée de manière à correspondre typiquement à une injection de réactivité de 10 pcm/s. La vitesse de descente de l'absorbant de contrôle Fdesc est fixée de manière à obtenir typiquement une injection d'anti-réactivité de - 30 pcm/s. Cette valeur permet par exemple de passer sans arrêt d'urgence les principaux transitoires de pompage.

La marge d'état d'anti-réactivité prédéterminée $\beta$ vaut typiquement 500 pcm.

La chaîne cinématique 15 est configurée pour qu'un pas de rotor corresponde à une injection de réactivité comprise entre 0,5 et 5 pcm, de préférence entre 1 et 3 pcm, et typiquement égale à 1 pcm. Ce paramètre est appelé efficacité de l'injection de réactivité E, et exprimé en pcm par pas moteur.

Le moteur 3 est doté normalement d'un stator à trois phases.

Le moteur 3 est calibré pour que sa vitesse de décrochage en montée, c'est-à-dire la fréquence au-delà laquelle le moteur n'entraîne pas l'absorbant en montée quelle que soit la fréquence de commande, soit égale à k.Fdesc. La vitesse de décrochage est une caractéristique physique du moteur qui représente le fait que, au-delà d'une certaine fréquence de commande, le moteur ne peut plus suivre la commande.

L'inertie de la chaîne cinématique fait que, si le moteur n'est plus alimenté, l'absorbant de contrôle va continuer à se déplacer, ce déplacement correspondant à un nombre de pas de rotor maximal Ni, généralement compris entre 1 et 10.

On considère ici une durée d'observation Tobs égale à 100 ms, glissant après chaque pas. La durée T'obs est également égale à 100 ms.

Dans l'exemple de dimensionnement présenté, ici, l'option de conception retenue ci-après consiste à ne pas considérer le sens de rotation dans le dimensionnement du système. Dès lors, pour ne pas déclencher intempestivement pendant les manœuvres normales à descendre (généralement plus rapides que les manœuvres à monter), c'est la vitesse de descente qui est considérée ci-après.

A la vitesse de descente, 100 ms correspond à un nombre de pas de rotor en descente Ndesc égal à 3. Cette valeur est calculée à l'aide de la formule suivante :

$$Ndesc = Fdesc \times Tobs.$$

En retenant, par exemple, une marge de 2 pas pour s'affranchir de déclenchements intempestifs, on peut donc considérer que 5 pas de rotor (ou 5 pas de commande) dans une période de 100 ms correspond à une anomalie. Cette marge sur le nombre de pas est retenue pour être tolérant avec une éventuelle détection parasite, quelle que soit l'origine.

Le nombre maximum de pas de rotation N'max pendant la fenêtre de temps T'obs est ici de 5.

Le nombre maximum Nmax d'impulsions électriques délivré à l'une des phases pendant la fenêtre de temps Tobs est ici aussi de 5.

Par ailleurs, on retient un délai de réaction Tr = 100 ms, correspondant au temps de réponse des interrupteurs quand l'une des trois unités 37, 39 et 41 détecte une anomalie.

Le nombre de pas de rotor réalisé dans le sens de la montée en cas de défaillance de la commande est donc plafonné par :

$$N0 = (Fdesc \times Tobs + 2) + kFdesc \times Tr + Ni$$

L'injection de réactivité correspondante est calculée par la formule suivante :

$$\Delta\rho 0 = N0 \times E$$

Parmi toutes les valeurs de dimensionnement indiquées ci-dessus, seule la valeur de k (calage du décrochage par rapport à la vitesse de descente souhaitée) dépend de la conception électromécanique. Si l'on veut s'affranchir des difficultés mentionnées dans le préambule de la présente demande, il est important que la valeur de k n'ait qu'une influence du second ordre sur N0. L'analyse de sensibilité résumée dans le tableau ci-dessous montre que même avec un facteur de marge de 10 sur la valeur de k, l'injection de réactivité reste inférieure à 10% de la marge de réactivité prévue à la conception $\beta$.

| E | Efficacité chaine cinématique | pcm/pas | 1 | 1 | 1 | 1 |
|---|---|---|---|---|---|---|
| Fdesc | Vitesse à descendre | pas/s | 30 | 30 | 30 | 30 |
| Ni | Inertie chaine cinématique sur coupure moteur | pas | 2 | 2 | 2 | 2 |
| Tobs | Durée d'observation glissante | secondes | 0,1 | 0,1 | 0,1 | 0,1 |
| Tr | Délai de réaction | secondes | 0,1 | 0,1 | 0,1 | 0,1 |
| k | Marge au décrochage Fdéc/Fmax | sans | 1,5 | 2 | 5 | 10 |
| N0 | Nombre de pas intempestifs | sans | 11,5 | 13 | 22 | 37 |
| $\Delta\rho 0$ | Réactivité injectée en pcm | pcm | 11,5 | 13 | 22 | 37 |
| $\Delta\rho 0$ | Réactivité injectée en % de $\beta$ | % | 2% | 3% | 4% | 7% |

L'invention porte également sur un procédé de surveillance d'une situation potentielle de montée en survitesse d'un absorbant de contrôle d'un réacteur nucléaire.

Ce procédé est particulièrement adapté pour être mis en œuvre par le mécanisme d'entraînement ayant les caractéristiques ci-dessus.

Inversement, le mécanisme d'entraînement est particulièrement adapté pour la mise en œuvre du procédé de surveillance qui va maintenant être décrit.

Le procédé de surveillance est destiné à un réacteur nucléaire équipé d'un mécanisme d'entraînement de l'absorbant de contrôle comprenant :

- au moins un moteur électrique 5 de type pas à pas comprenant un stator 7 ayant au moins des première, seconde et troisième phases 17, 19, 21 et un rotor 9 ;
- une alimentation électrique 11, raccordée électriquement à chacune des première, seconde et troisième phases 17, 19, 21 du stator 7 ;
- une commande 13 de l'alimentation électrique, programmée pour que l'alimentation électrique délivre à chacune des première, seconde et troisième phases 17, 19, 21 des impulsions électriques à une fréquence courante, le rotor 9 étant déplacé par unité de temps d'un nombre de pas de rotation fonction de ladite fréquence ;

- une chaîne cinématique 15 agencée pour accoupler le rotor 9 à la grappe de contrôle 3, la chaîne cinématique 15 étant agencée pour convertir un mouvement de rotation du rotor 9 en mouvement de translation de l'absorbant 3 dans le cœur du réacteur, sans possibilité de glissement.

Chaque impulsion électrique forme un pas de commande de forme adaptée à la commande du moteur

Le moteur électrique 5, l'alimentation électrique 11, la commande 13 et la chaîne cinématique 15 sont conformes à la description qui en est donnée ci-dessus relativement au mécanisme d'entraînement.

Le procédé de surveillance comprend au moins deux étapes de surveillance indépendantes l'une de l'autre, chaque étape de surveillance comprenant les opérations suivantes :

- mesurer aux bornes de l'une des première, deuxième et troisième phases 17, 19, 21 le nombre de pas de commande délivrés à ladite phase pendant une fenêtre de temps Tobs de durée prédéterminée, ou le nombre de pas de rotation du rotor 9 pendant une fenêtre de temps T'obs de durée prédéterminée ;
- comparer le nombre de pas de commande mesurés avec un nombre maximum prédéterminé Nmax ou le nombre de pas de rotation mesurés avec un maximum prédéterminé N'max.

Plus précisément, le procédé de surveillance comprend une première étape de surveillance pendant laquelle le nombre de pas de commande délivrés à la première phase 17 pendant la fenêtre de temps Tobs de durée prédéterminée est mesuré aux bornes de la première phase, l'alimentation électrique 11 étant coupée en cas de dépassement du maximum prédéterminé Nmax.

Pour ce faire, la première étape prévoit une comparaison du nombre de pas de commande mesurés avec le maximum prédéterminé Nmax.

Le procédé de surveillance comprend typiquement en outre une seconde étape de surveillance, pendant laquelle le nombre de pas de commande délivrés à la seconde phase 19 pendant la fenêtre de temps Tobs de durée prédéterminée est mesuré aux bornes de la seconde phase, l'alimentation électrique 11 étant coupée en cas de dépassement du maximum prédéterminé Nmax.

Pour ce faire, la seconde étape prévoit une comparaison du nombre de pas de commande mesurés avec le maximum prédéterminé Nmax.

Le procédé de surveillance comprend avantageusement également une troisième étape de surveillance pendant laquelle le nombre du pas de rotation du rotor 9 pendant la fenêtre de temps T'obs de durée prédéterminée est mesuré aux bornes de la troisième phase, l'alimentation électrique 11 étant coupée en cas de dépassement du maximum prédéterminé N'max.

Pour ce faire, la troisième étape prévoit une comparaison du nombre de pas de commande mesurés avec le maximum prédéterminé N'max.

Typiquement, les différentes étapes de surveillance sont effectuées de manière concomitante, en parallèle. Elles sont répétées en permanence, la surveillance de la vitesse de montée de l'absorbant de contrôle étant continue et permanente.

Les première, seconde et troisième étapes sont mises en œuvre par des première, seconde et troisième unités, physiquement et fonctionnellement indépendante les unes des autres. Ces première, seconde et troisième unités sont du type décrites plus haut en référence au mécanisme d'entraînement 1.

Ainsi, à la première étape de surveillance, le nombre de pas de commande délivrés à la première phase 17 est compté en détectant les fronts de tension. Chaque front de tension correspond typiquement à une impulsion électrique délivrée à la première phase 17.

La première étape comporte typiquement les opérations suivantes :

- acquérir la tension aux bornes de la première phase 17 ;
- éventuellement mettre en forme la tension acquise ;
- éventuellement appliquer un filtre passe bas à la tension mise en forme;
- compter le nombre d'impulsions électriques délivrées à la première phase 17 en détectant les fronts de tension montants dans la tension acquise ;
- recharger périodiquement un compteur à la valeur Nmax, avec une période de Tobs ; à chaque impulsion détectée, diminuer la valeur du compteur de 1. Si le compteur atteint la valeur de 0, on considère que le nombre d'impulsions électriques délivrées est supérieur au maximum prédéterminé Nmax.

La première étape comporte en outre une opération de coupure de l'alimentation électrique du moteur électrique si le nombre d'impulsions électriques dépasse le maximum prédéterminé Nmax correspondant.

Pour ce faire, on agit par exemple sur le dispositif d'inhibition 33 décrit plus haut.

A la seconde étape de surveillance, le nombre d'impulsions électriques délivrées à la seconde phase 19 est compté en détectant les fronts de courant.

Plus précisément, la seconde étape de surveillance comprend les opérations suivantes :

- mesurer le courant, c'est-à-dire l'intensité traversant la seconde phase 19 ;
- éventuellement appliquer un filtre passe bas au courant mesuré ;
- détecter les fronts montants de courant, par comparaison de la valeur du courant mesuré avec un seuil prédéterminé ;
- à chaque fois qu'un front montant de courant est détecté, charger avec une valeur connue un circuit RC 73 servant de base de temps ;
- comparer la charge de la capacité 77 du circuit RC 73 avec un seuil prédéterminé.

Comme expliqué plus haut, le circuit RC 73 est agencé de telle sorte que si le nombre de fronts de courant montant détectés pendant la durée Tobs dépasse un nombre prédéterminé, la charge de la capacité 77 dépasse le seuil prédéterminé. On considère que le nombre d'impulsions électriques délivrées à la seconde phase 19 a alors dépassé le maximum prédéterminé Nmax.

Par ailleurs, la seconde étape de surveillance comprend une opération de coupure de l'alimentation électrique du moteur électrique 5 si le nombre d'impulsions électriques détecté dépasse le maximum prédéterminé Nmax. On agit pour cela sur un second organe de coupure indépendant du premier, par exemple sur le sectionneur 25 de l'alimentation électrique.

A la troisième étape de surveillance, le nombre de pas de rotation du rotor 9 est compté en mesurant une impédance aux bornes de la troisième phase 21.

Plus précisément, à la troisième étape de surveillance, on effectue les opérations suivantes :

- injection d'un signal alternatif, par exemple un courant, superposé à l'alimentation électrique de la troisième phase 21, de fréquence beaucoup plus élevée que celle de l'alimentation électrique, et de faible tension ;
- acquisition d'un signal d'entrée correspondant au courant traversant la troisième phase 21 ;
- application d'un filtre passe bande 81 sur le signal d'entrée, centré sur la fréquence du signal alternatif injecté ;
- mesure de la tension dans la bande de fréquence sélectionnée par le filtre passe bande 81, cette mesure de tension étant une image de l'inductance du bobinage de la troisième phase 21.

Le signal alternatif injecté présente une fréquence de moins 5 fois supérieure à celle de l'alimentation électrique, typiquement environ 10 fois supérieure à la fréquence de l'alimentation électrique.

Comme indiqué plus haut, l'inductance mesurée est élevée si une dent 23 du rotor 9 est en face d'une bobine de la troisième phase 21, et est faible si une dent 23 du rotor n'est pas en face d'une bobine de la troisième phase 21 du stator.

La troisième étape de surveillance comprend encore les opérations suivantes :

- périodiquement, recharger un compteur à la valeur N'max, le compteur étant rechargé à une période de T'obs ;
- à chaque fois qu'une inductance élevée est détectée, c'est-à-dire à chaque fois qu'une dent 23 du rotor passe en face d'une bobine de la troisième phase 21, diminuer de 1 le compteur. On considère que le nombre de pas de rotation du rotor dépasse le maximum prédéterminé N'max si le compteur est ramené à 0.

Comme précédemment, la troisième étape comprend en outre une opération de coupure de l'alimentation électrique du moteur électrique 5, si le nombre de pas de rotation détecté dépasse le nombre maximum prédéterminé N'max. Pour cela, on agit sur un troisième organe de coupure, qui est par exemple le sectionneur 27 de l'alimentation électrique.

Comme expliqué précédemment, la chaîne cinématique 15 est configurée pour que le nombre maximum d'impulsions électriques ou de pas de rotation du rotor entraîne un apport de réactivité dans le cœur inférieur à une limite d'anti-réactivité β prédéterminée du réacteur, moins une marge prédéterminée par des analyses de sûreté. La marge est par exemple de 10% de β.

En effet, comme décrit plus haut, le procédé de surveillance est conçu pour que le moteur soit coupé si on détecte par exemple plus de N'max pas de rotation du rotor sur la durée T'obs ou Nmax pas de rotation du rotor sur la durée Tobs. Ceci correspond à un nombre maximum de pas de rotation effectivement effectué par le rotor de N0, compte tenu du temps de réaction des organes de coupure et de l'inertie de la chaîne cinématique. N0 est calculé à l'aide de la formule donnée ci-dessus.

L'injection de réactivité correspondant au N0 pas est

$$\Delta\rho0 = N0 \times E,$$

où E est l'efficacité de l'injection de réactivité, exprimée en nombre de pcm par pas moteur. Cette efficacité dépend de la conception de la chaîne cinématique. E est choisi pour que, compte tenu des paramètres de dimensionnement sélectionnés par ailleurs, $\Delta\rho0$ reste toujours inférieur à $\beta$ moins la marge.

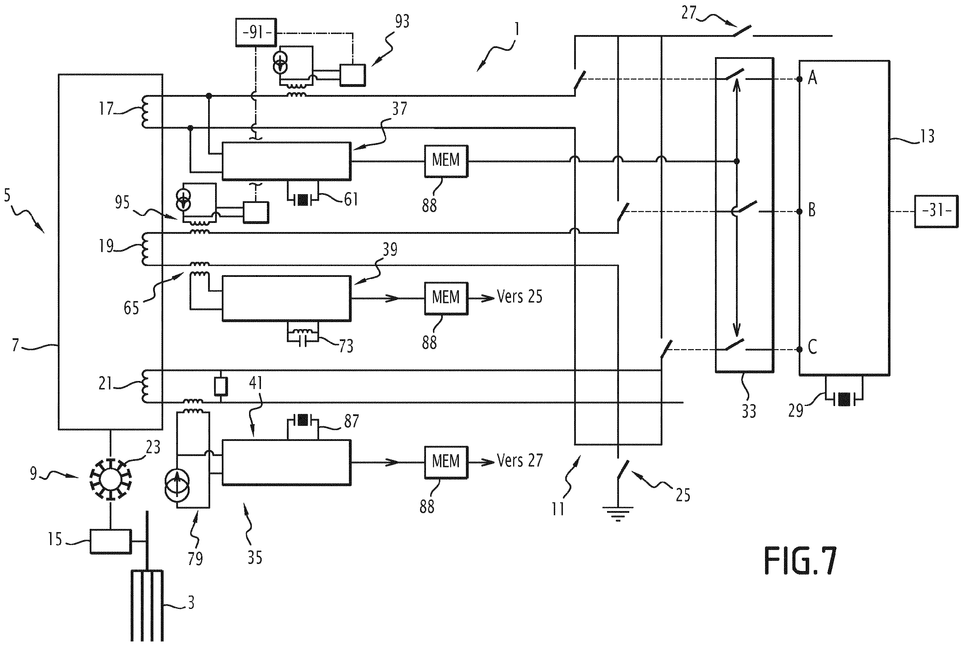

Un second mode de réalisation va maintenant être décrit en référence à la figure 7. Seuls les points par lesquels le second mode de réalisation est différent du premier mode de réalisation seront détaillés ci-dessous. Les éléments identiques ou assurant les mêmes fonctions seront désignés par les mêmes références.

Dans le second mode de réalisation, le dispositif de surveillance 35 comprend une unité 91 de détermination de la position de l'absorbant de contrôle 3. Il comprend également une première unité 93 configurée pour mesurer l'impédance aux bornes de la première phase 17, et/ou une seconde unité 95 mesurant l'impédance aux bornes de la seconde phase 19.

Par ailleurs, la troisième unité de surveillance 41 mesure l'impédance aux bornes de la troisième phase 21.

L'unité 91 de détermination de la position d'absorbant utilise les mesures d'impédance aux bornes d'au moins deux des première, deuxième et troisième phases. Typiquement, elle utilise les mesures d'impédance aux bornes des trois phases.

La première unité 93 comporte avantageusement des moyens similaires à ceux prévus dans la troisième unité de surveillance 41 pour mesurer l'impédance, à savoir la source 79, le filtre passe bande 81 et l'organe de mesure de tension 83. De même, la seconde unité 95 comporte avantageusement des moyens similaires à ceux prévus dans la troisième unité de surveillance 41 pour mesurer l'impédance..

La première unité de mesure de l'impédance 93 fournit un signal à l'unité 91 de détermination de la position de la grappe, à chaque fois qu'une dent du rotor passe en face d'une bobine de la première phase 17.

De même, la seconde unité de mesure de l'impédance 95 fournit un signal à l'unité 91 à chaque fois qu'une dent du rotor passe devant une bobine de la seconde phase 19.

Par ailleurs, la troisième unité de surveillance 41 fournit un signal à l'unité 91 à chaque passage d'une dent en face d'une bobine de la troisième phase 21.

L'unité 91 est configurée pour compter le nombre de pas rotor et déterminer le sens de rotation du rotor 9 en fonction des signaux fournis par les unités 41, 93 et 95. Ces unités fournissent à l'unité 91, en permanence, le nombre de passages d'une dent rotor devant une phase 21,17 ou 19.

L'unité 91 est configurée pour, en utilisant ces informations, déterminer en permanence la position d'insertion de l'absorbant de contrôle 3.

Comme indiqué précédemment, il est suffisant qu'une seule de la première unité et de la seconde unité soit équipée d'une sous-unité de mesure d'impédance pour pouvoir déterminer le sens de rotation du rotor. Quand les trois sous-unités sont équipées pour mesurer l'impédance aux bornes de la phase correspondante, on dispose d'une redondance d'ordre 2 pour la détermination du sens de rotation. On dispose alors d'une redondance d'ordre 3 pour la détermination de la vitesse de rotation du rotor et du nombre de pas de rotation.

Il est à noter que, dans ce cas, il est impératif que la première unité de surveillance 37 et la seconde sous-unité de surveillance 41 soient équipées respectivement du filtre passe bas 58 et du filtre passe bas 69, pour couper les fréquences de la tension injectée aux bornes des phases 17 et 19.

Ainsi, le procédé de surveillance conforme au second mode de réalisation de l'invention comprend, en plus des première et seconde étape de surveillance, une première et/ou une seconde étape de mesure pendant lesquelles respectivement le nombre de pas de rotation du rotor est compté en mesurant une impédance aux bornes de la première ou deuxième phase, le procédé comprenant en outre une étape de détermination de la position de l'absorbant utilisant la mesure d'impédance aux bornes d'au moins deux des première, deuxième et troisième phases.

En effet, la mesure d'impédance aux bornes de deux des trois phases permettent de déterminer le sens de rotation du rotor en permanence.

Cette information, couplée avec la mesure du nombre de pas de rotation du rotor permet de déterminer en permanence le nombre de pas manoeuvré et le sens de rotation du rotor et donc la position de l'absorbant de grappe.

Ainsi, dans l'invention, on met en place une instrumentation diversifiée, de préférence de redondance 3, permettant de détecter une survitesse de montée de l'absorbant de contrôle. La non-détection de l'évènement « apparition de plus de Nmax commande dans un temps d'observation Tobs ou rotation du rotor de plus N'max pas dans un temps d'observation T'obs donné » résulterait de la défaillance combinée de toutes les voies de mesures diversifiées. La probabilité de ce cumul d'événement est suffisamment faible pour être conforme au classement de sûreté lié à la conséquence grave de cette non-détection. Ceci permet de n'effectuer un test fonctionnel d'ensemble du mécanisme d'entraînement qu'à l'occasion des arrêts de tranche. Ce test peut être effectué avec les absorbants de contrôle désaccouplés du moteur. Il est alors possible d'injecter volontairement une vitesse moteur trop rapide, pour tester les différentes unités du dispositif de surveillance.

On soulignera également que le dispositif de surveillance agit directement sur la commande et l'alimentation électrique du moteur, sans passer par le contrôle commande centralisé de la centrale. Ceci permet d'une part un temps de réaction extrêmement faible, et d'autre part d'éviter tout mode commun avec le contrôle commande centralisé.

Les première, seconde et troisième unités 37, 39, 41 pourraient être d'un type différent de celui décrit ci-dessus.

## Revendications

1. Mécanisme d'entraînement d'au moins un absorbant de contrôle (3) d'un réacteur nucléaire, le mécanisme (1) comprenant :

   - au moins un moteur électrique (5) de type pas-à-pas comprenant un stator (7) ayant au moins des première, seconde et troisième phases (17, 19, 21) et un rotor (9) ;
   - une alimentation électrique (11), raccordée électriquement à chacune des première, seconde et troisième phases (17, 19, 21) du stator (7) ;
   - une commande (13) de l'alimentation électrique (11), programmée pour que l'alimentation électrique (11) délivre à chacune des première, seconde et troisième phases (17, 19, 21) des impulsions électriques à une fréquence courante, chaque impulsion électrique formant un pas de commande de forme adaptée à la commande du moteur, le rotor (9) étant déplacé par unité de temps d'un nombre de pas de rotation fonction de ladite fréquence ;
   - une chaîne cinématique (15) agencée pour accoupler le rotor (9) à l'absorbant de contrôle (3), la chaîne cinématique (15) étant agencée pour convertir un mouvement de rotation du rotor (9) en un mouvement de translation dudit absorbant de contrôle (3) dans le cœur du réacteur, sans possibilité de glissement ;

   le mécanisme d'entraînement (1) comprenant un dispositif (35) de surveillance d'une situation potentielle de montée en survitesse de l'absorbant (3) ; **caractérisé en ce que**
   le dispositif de surveillance (35) comprend au moins deux unités (37, 39, 41) de surveillance indépendantes l'une de l'autre, chacune connectée aux bornes de l'une des première, seconde et troisième phases (17, 19, 21), chaque unité de surveillance (37, 39, 41) étant configurée pour :

   - mesurer le nombre de pas de commande délivrés à ladite phase (17, 19, 21) pendant une fenêtre de temps (Tobs) de durée prédéterminée ou le nombre de pas de rotation du rotor (9) pendant une fenêtre de temps (T'obs) de durée prédéterminée ;
   - comparer le nombre de pas de commande mesurés avec un maximum prédéterminé (Nmax) ou le nombre de pas de rotation mesurés avec un maximum prédéterminé (N'max).

2. Mécanisme d'entraînement selon la revendication 1, **caractérisé en ce que** le dispositif de surveillance (35) comprend au moins des première, seconde et troisième unités (37, 39, 41) de surveillance indépendantes les unes des autres, connectées aux bornes respectivement des première, seconde et troisième phases (17, 19, 21),
   la première unité (37) et la seconde unité (39) étant chacune configurée pour mesurer le nombre de pas de commande pendant la fenêtre de temps (Tobs) de durée prédéterminée, et couper l'alimentation électrique (11) en cas de dépassement du maximum prédéterminé (Nmax).
   la troisième unité (41) étant configuré pour mesurer le nombre de pas de rotation du rotor pendant la fenêtre de temps (T'obs) de durée prédéterminée, et couper l'alimentation électrique (11) en cas de dépassement du maximum prédéterminé (N'max).

3. Mécanisme d'entraînement selon la revendication 2, **caractérisé en ce que** les première et seconde unités (37, 39) comportent chacune au moins l'un des circuits suivants :

   * un circuit logique configuré pour compter le nombre d'impulsions électriques délivrées respectivement à la première phase (17) ou à la deuxième phase (19) ;
   * un circuit analogique configuré pour compter le nombre d'impulsions électriques délivrées respectivement à la première phase (17) ou à la deuxième phase (19) ;
   * un circuit logique ou analogique de comparaison des impulsions électriques délivrées respectivement à la première phase (17) ou à la deuxième phase (19) avec un gabarit prédéterminé.

4. Mécanisme d'entraînement selon l'une quelconque des revendications 2 à 3, **caractérisé en ce que** la troisième unité (41) est configurée pour détecter le franchissement d'un pas de rotation par le rotor par mesure d'impédance aux bornes de la troisième phase (21) du stator (7).

5. Mécanisme d'entraînement selon la revendication 4, **caractérisé en ce que** le dispositif de surveillance (35) comprend, en complément des première et seconde unités (37, 39) de surveillance, une première et/ou une seconde unité de mesure (93, 95) configurée pour mesurer une impédance aux bornes de la première ou deuxième phase (17, 19) respectivement, et une unité (91) utilisant la mesure d'impédance aux bornes d'au moins deux des première, deuxième et troisième phases (17, 19, 21) pour déterminer la position de l'absorbant (3).

6. Mécanisme d'entraînement selon l'une quelconque des revendications 2 à 5, **caractérisé en ce que** les première, seconde et troisième unités (37, 39, 41) sont configurées pour couper l'alimentation électrique (11) en agissant respectivement sur des premier, second et troisième interrupteurs (33, 25, 27) indépendants les uns des autres si le nombre de pas de commande ou le nombre de pas de rotation dépasse le maximum prédéterminé (Nmax, N'max) correspondant.

7. Mécanisme d'entraînement selon l'une quelconque des revendications précédentes, **caractérisé en ce que** la chaîne cinématique (35) est configurée pour que le nombre maximum d'impulsions électriques ou de pas de rotation (Nmax, N'max) entraîne un apport de réactivité inférieur à une limite d'anti-réactivité ($\beta$) excluant un accident de prompte criticité prédéterminée du réacteur, moins une marge prédéterminée par des analyses de sûreté.

8. Mécanisme d'entraînement selon l'une quelconque des revendications précédentes, **caractérisé en ce que** la chaîne cinématique (15) assure le maintien de position même sur coupure de l'alimentation du moteur.

9. Procédé de surveillance d'une situation potentielle de montée en survitesse d'un absorbant de contrôle (3) d'un réacteur nucléaire équipé d'un mécanisme d'entraînement (1) dudit absorbant de contrôle (3) comprenant :

- au moins un moteur électrique (5) de type pas-à-pas comprenant un stator (7) ayant au moins des première, seconde et troisième phases (17, 19, 21) et un rotor (9) ;
- une alimentation électrique (11), raccordée électriquement à chacune des première, seconde et troisième phases (17, 19, 21) du stator ;
- une commande (13) de l'alimentation électrique (11), programmée pour que l'alimentation électrique (13) délivre à chacune des première, seconde et troisième phases (17, 19, 21) des impulsions électriques à une fréquence courante, chaque impulsion électrique formant un pas de commande de forme adaptée à la commande du moteur, le rotor (9) étant déplacé par unité de temps d'un nombre de pas de rotation fonction de ladite fréquence ;
- une chaîne cinématique (15) agencée pour accoupler le rotor (9) à l'absorbant de contrôle (3), la chaîne cinématique (15) étant agencée pour convertir un mouvement de rotation du rotor (9) en un mouvement de translation dudit absorbant (3) dans le cœur du réacteur, sans possibilité de glissement ;

le procédé comprenant au moins deux étapes de surveillance indépendantes l'une de l'autre, chaque étape de surveillance comprenant les opérations suivantes :

- mesurer aux bornes de l'une des première, deuxième et troisième phases (17, 19, 21) le nombre de pas de commande délivrés à ladite phase pendant une fenêtre de temps de durée prédéterminée (Tobs) ou le nombre de pas de rotation du rotor (9) pendant une fenêtre de temps (T'obs) de durée prédéterminée ;
- comparer le nombre de pas de commande mesurés avec un maximum prédéterminé (Nmax) ou le nombre de pas de rotation mesurés avec un maximum prédéterminé (N'max).

10. Procédé de surveillance selon la revendication 9, **caractérisé en ce que** le procédé de surveillance comprend :

- des première et seconde étapes de surveillance pendant lesquelles respectivement le nombre de pas de commande délivrés aux première et seconde phases (17, 19) pendant la fenêtre de temps (Tobs) de durée prédéterminée est mesuré aux bornes de ladite phase, l'alimentation électrique (11) étant coupée en cas de dépassement du maximum prédéterminé (Nmax).
- une troisième étape de surveillance pendant laquelle le nombre de pas de rotation du rotor (9) pendant la fenêtre de temps (T'obs) de durée prédéterminée est mesuré aux bornes de la troisième phase, l'alimentation électrique étant coupée en cas de dépassement du maximum prédéterminé (N'max).

**11.** Procédé de surveillance selon la revendication 10, **caractérisé en ce que** , aux première et seconde étapes de surveillance, le nombre de pas de commande respectivement délivrés à la première phase (17) et à la seconde phase (19) est compté en détectant les fronts de tension ou les fronts de courant.

**12.** Procédé de surveillance selon l'une quelconque des revendications 10 à 11, **caractérisé en ce que**, à la troisième étape de surveillance, le nombre de pas de rotation du rotor (9) est compté en mesurant une impédance aux bornes de la troisième phase (21).

**13.** Procédé de surveillance selon la revendication 12, **caractérisé en ce que** le procédé comprend, en plus des première et seconde étapes de surveillance, une première et/ou une seconde étape de mesure pendant lesquelles respectivement le nombre de pas de rotation du rotor (9) est compté en mesurant une impédance aux bornes de la première et deuxième phase (17, 19), le procédé comprenant une étape de détermination de la position de l'absorbant (3) utilisant la mesure d'impédance aux bornes d'au moins deux des première, deuxième et troisième phases (17, 19, 21).

**14.** Procédé de surveillance selon l'une quelconque des revendications 10 à 13, **caractérisé en ce qu'**au cours des première, seconde et troisième étapes, l'alimentation électrique du moteur électrique (5) est coupée en agissant respectivement sur des premier, second et troisième interrupteurs (33, 25, 27) indépendants les uns des autres si le nombre d'impulsion électrique ou le nombre de pas de rotation dépasse le maximum prédéterminé (Nmax, N'max) correspondant.

**15.** Procédé de surveillance selon l'une quelconque des revendications 9 à 14, **caractérisé en ce que** la chaîne cinématique (15) est configurée pour que le nombre maximum d'impulsions électriques ou de pas de rotation (Nmax, N'max) entraîne un apport de réactivité inférieur à une limite d'anti-réactivité (β) excluant un accident de prompte criticité prédéterminée du réacteur moins une marge prédéterminée par les analyses de sûreté.


**Patentansprüche**

**1.** Mechanismus zum Antreiben mindestens eines Steuerabsorbers (3) eines Nuklearreaktors, der Mechanismus (1) aufweisend:

- mindestens einen elektrischen Schrittmotor (5), welcher einen Stator (7) mit mindestens ersten, zweiten und dritten Phasen (17, 19, 21) und einen Rotor (9) aufweist,
- eine Stromversorgung (11), welche mit jeder von der ersten, der zweiten und der dritten Phase (17, 19, 21) des Stators (7) elektrisch verbunden ist,
- eine Steuerung (13) der Stromversorgung (11), welche derart programmiert ist, dass die Stromversorgung (11) elektrische Pulse mit einer momentanen Frequenz an jede von der ersten, der zweiten und der dritten Phase (17, 19, 21) schickt, wobei jeder elektrische Puls einen Steuerschritt von der Form bildet, welche zur Steuerung des Motors eingerichtet ist, wobei der Rotor (9) je Zeiteinheit um eine Anzahl von Rotationsschritten in Abhängigkeit von der Frequenz bewegt wird,
- einen Antriebsstrang (15), welcher zum Verbinden des Rotors (9) mit dem Steuerabsorber (3) eingerichtet ist, wobei der Antriebsstrang (15) dazu eingerichtet ist, eine Rotationsbewegung des Rotors (9) in eine Translationsbewegung des Steuerabsorbers (3) in den Reaktorkern ohne eine Rutschmöglichkeit umzuwandeln,

wobei der Antriebsmechanismus (1) eine Vorrichtung (35) zum Überwachen einer potentiellen Situation des Anstiegs mit überhöhter Geschwindigkeit des Absorbers (3) aufweist,
**gekennzeichnet dadurch, dass**
die Vorrichtung zum Überwachen (35) mindestens zwei voneinander unabhängige Überwachungseinheiten (37, 39, 41) aufweist, von denen jede mit den Anschlüssen von einer von der ersten, der zweiten und der dritten Phase (17, 19, 21) verbunden ist, wobei jede Überwachungseinheit (37, 39, 41) eingerichtet ist zum:

- Messen der Zahl von Steuerschritten, welche an die Phase (17, 19, 21) während eines Zeitfensters (Tobs) einer vorbestimmten Dauer geliefert werden, oder der Zahl von Rotationsschritten des Rotors (9) während eines Zeitfensters (T'obs) der vorbestimmten Dauer,
- Vergleichen der Zahl von gemessenen Steuerschritten mit einem vorbestimmten Maximum (Nmax) oder der Zahl von gemessenen Rotationsschritten mit einem vorbestimmten Maximum (N'max).

**2.** Mechanismus zum Antreiben gemäß dem Anspruch 1, **gekennzeichnet dadurch, dass** die Überwachungsvorrichtung (35) mindestens eine erste, zweite und dritte Überwachungseinheit (37, 39, 41), die voneinander unabhängig sind, aufweist, die mit den jeweiligen Anschlüssen der ersten, der zweiten und der dritten Phase (17, 19, 21) verbunden sind,

wobei die erste Einheit (37) und die zweite Einheit (39) dazu eingerichtet sind, die Zahl der Steuerschritte während des Zeitfensters (Tobs) der vorbestimmten Dauer zu messen und die Stromversorgung (11) zu unterbrechen, falls das vorbestimmte Maximum (Nmax) überschritten wird,

wobei die dritte Einheit (41) dazu eingerichtet ist, die Zahl von Rotationsschritten des Rotors (9) während eines des Zeitfensters (T'obs) der vorbestimmten Dauer zu messen und die Stromversorgung (11) zu unterbrechen, falls das vorbestimmte Maximum (N'max) überschritten wird.

**3.** Mechanismus zum Antreiben gemäß dem Anspruch 2, **gekennzeichnet dadurch, dass** die erste und die zweite Einheit (37, 39) jeweils mindestens eine der folgenden Schaltungen aufweisen:

- eine Logikschaltung, die dazu eingerichtet ist, die Zahl von elektrischen Pulsen, welche jeweilig an die erste Phase (17) oder an die zweite Phase (19) geliefert werden, zu zählen,
- eine Analogschaltung, welche dazu eingerichtet ist, die Zahl von elektrischen Pulsen, welche jeweilig an die erste Phase (17) oder an die zweite Phase (19) geliefert werden, zu zählen,
- eine Logik- oder Analogschaltung zum Vergleichen der jeweilig an die erste Phase (17) oder an die zweite Phase (19) gelieferten elektrischen Pulse mit einem vorbestimmten Maß.

**4.** Mechanismus zum Antreiben gemäß irgendeinem der Ansprüche 2 bis 3, **gekennzeichnet dadurch, dass** die dritte Einheit (41) dazu eingerichtet ist, das Überschreiten eines Rotationsschritts durch den Rotor mittels Impedanzmessung an den Anschlüssen der dritten Phase (21) des Stators (7) zu messen.

**5.** Mechanismus zum Antreiben gemäß dem Anspruch 4, **gekennzeichnet dadurch, dass** die Überwachungsvorrichtung (35), ergänzend zu der ersten und zweiten Überwachungseinheit (37, 39), eine erste und/oder eine zweite Messeinheit (93, 95), welche dazu eingerichtet ist, jeweilig eine Impedanz an den Anschlüssen der ersten oder zweiten Phase (17,19) zu messen, und eine Einheit (91), welche die Impedanzmessung an Anschlüssen von mindestens zwei von der ersten, der zweiten und der dritten Phase (17, 19, 21) dazu nutzt, die Position des Absorbers (3) zu ermitteln, aufweist.

**6.** Mechanismus zum Antreiben gemäß irgendeinem der Ansprüche 2 bis 5, **gekennzeichnet dadurch, dass** die erste, zweite und dritte Einheit (37, 39, 41) dazu eingerichtet sind, die Stromversorgung (11) durch jeweiliges Einwirken auf einen ersten, zweiten und dritten Schalter (33, 25, 27), die voneinander unabhängig sind, zu unterbrechen, falls die Zahl von Steuerschritten oder die Zahl von Rotationsschritten das zugehörige vorbestimmte Maximum (Nmax, N'max) überschreitet.

**7.** Mechanismus zum Antreiben gemäß irgendeinem der vorhergehenden Ansprüche, **gekennzeichnet dadurch, dass** der Antriebsstrang (15) so eingerichtet ist, dass die maximale Zahl an elektrischen Pulsen oder an Rotationsschritten (Nmax, N'max) eine Reaktivitätszufuhr unterhalb einer Grenze einer Anti-Reaktivität ($\beta$), die einen Unfall von vorbestimmter schneller Kritikalität des Reaktors ausschließt, abzüglich einer mittels Sicherheitsanalysen vorbestimmten Spanne herbeiführt.

**8.** Mechanismus zum Antreiben gemäß irgendeinem der vorhergehenden Ansprüche, **gekennzeichnet dadurch, dass** der Antriebsstrang (15) die Beibehaltung der gleichen Position bei Unterbrechung der Versorgung des Motors gewährleistet.

**9.** Verfahren zum Überwachen einer potentiellen Situation des Anstiegs mit überhöhter Geschwindigkeit eines Steuerabsorbers (3) eines Nuklearreaktors, welcher mit einem Mechanismus zum Antreiben (1) des Steuerabsorbers (3) ausgestattet ist, aufweisend:

- mindestens einen elektrischen Schrittmotor (5), welcher einen Stator (7) mit mindestens ersten, zweiten und dritten Phasen (17, 19, 21) und einen Rotor (9) aufweist,
- eine Stromversorgung (11), welche mit jeder von der ersten, der zweiten und der dritten Phase (17, 19, 21) des Stators (7) elektrisch verbunden ist,
- eine Steuerung (13) der Stromversorgung (11), welche derart programmiert ist, dass die Stromversorgung (11) an jede von der ersten, der zweiten und der dritten Phase (17, 19, 21) elektrische Pulse mit einer momentanen Frequenz schickt, wobei jeder elektrische Puls einen Steuerschritt von der Form bildet, welche zur Steuerung des Motors eingerichtet ist, wobei der Rotor (9) je Zeiteinheit um eine Anzahl von Rotationsschritten in Abhängigkeit von der Frequenz bewegt wird,

- einen Antriebsstrang (15), welcher zum Verbinden des Rotors (9) mit dem Steuerabsorber (3) eingerichtet ist, wobei der Antriebsstrang (15) dazu eingerichtet ist, eine Rotationsbewegung des Rotors (9) in eine Translationsbewegung des Steuerabsorbers (3) in den Reaktorkern ohne eine Rutschmöglichkeit umzuwandeln,

wobei das Verfahren mindestens zwei voneinander unabhängige Schritte des Überwachens aufweist, wobei jeder Schritt des Überwachens die folgenden Vorgänge aufweist:

- Messen, an den Anschlüssen von einer von der ersten, zweiten und dritten Phase (17, 19, 21), der Zahl von Steuerschritten, welche an die Phase (17, 19, 21) während eines Zeitfensters (Tobs) einer vorbestimmten Dauer geliefert werden, oder der Zahl von Rotationsschritten des Rotors (9) während eines Zeitfensters (T'obs) der vorbestimmten Dauer,
- Vergleichen der Zahl von gemessenen Steuerschritten mit einem vorbestimmten Maximum (Nmax) oder der Zahl von gemessenen Rotationsschritten mit einem vorbestimmten Maximum (N'max).

10. Verfahren zum Überwachen gemäß dem Anspruch 9, **gekennzeichnet dadurch, dass** das Verfahren zum Überwachen aufweist:

- einen ersten und zweiten Schritt des Überwachens, während welcher jeweilig die Zahl von Steuerschritten, welche jeweilig an die erste und zweite Phase (17, 19) während des Zeitfensters (Tobs) der vorbestimmten Dauer geliefert werden, an den Anschlüssen der besagten Phase gemessen werden, wobei die Stromversorgung (11) unterbrochen wird, falls das vorbestimmte Maximum (Nmax) überschritten wird,
- einen dritten Schritt des Überwachens, während welchem die Zahl von Rotationsschritten des Rotors (9) während eines des Zeitfensters (T'obs) der vorbestimmten Dauer an den Anschlüssen der dritten Phase gemessen wird, wobei die Stromversorgung unterbrochen wird, falls das vorbestimmte Maximum (N'max) überschritten wird.

11. Verfahren zur Überwachung gemäß dem Anspruch 10, **gekennzeichnet dadurch, dass**, bei dem ersten und zweiten Schritt des Überwachens, die Zahl von Steuerschritten, welche jeweilig an die erste Phase (17) und an die zweite Phase (19) geliefert werden, durch Detektieren der Spannungsflanken oder der Stromflanken gezählt wird.

12. Verfahren zur Überwachung gemäß irgendeinem der Ansprüche 10 bis 11, **gekennzeichnet dadurch, dass**, bei dem dritten Schritt des Überwachens, die Zahl von Rotationsschritten des Rotors (9) durch Messen einer Impedanz an den Anschlüssen der dritten Phase (21) gezählt wird.

13. Verfahren zur Überwachung gemäß dem Anspruch 10, **gekennzeichnet dadurch, dass** das Verfahren, zusätzlich zum ersten und zweiten Schritt des Überwachens, einen ersten und/oder zweiten Schritt des Messens aufweist, während welcher jeweilig die Zahl von Rotationsschritten des Rotors (9) durch Messen einer Impedanz an den Anschlüssen der ersten und zweiten Phase (17, 19) gezählt wird, wobei das Verfahren einen Schritt des Ermittelns der Position des Absorbers (3) unter Verwendung der Messung der Impedanz an den Anschlüssen von mindestens zwei von der ersten, der zweiten und der dritten Phase (17, 19, 21) aufweist.

14. Verfahren zur Überwachung gemäß irgendeinem der Ansprüche 10 bis 13, **gekennzeichnet dadurch, dass**, im Laufe der ersten, zweiten und dritten Schritte, die Stromversorgung des elektrischen Motors (5) durch jeweiliges Einwirken auf einen ersten, zweiten und dritten Schalter (33, 25, 27), die voneinander unabhängig sind, unterbrochen wird, falls die Zahl von Steuerschritten oder die Zahl von Rotationsschritten das zugehörige vorbestimmte Maximum (Nmax, N'max) überschreitet.

15. Verfahren zur Überwachung gemäß irgendeinem der Ansprüche 9 bis 14, **gekennzeichnet dadurch, dass** der Antriebsstrang (15) so eingerichtet ist, dass die maximale Zahl an elektrischen Pulsen oder an Rotationsschritten (Nmax, N'max) eine Reaktivitätszufuhr unterhalb einer Anti-Reaktivität-Grenze (β), die einen Unfall von vorbestimmter schneller Kritikalität des Reaktors ausschließt, abzüglich einer mittels Sicherheitsanalysen vorbestimmten Spanne herbeiführt.

**EP 3 443 560 B1**

**Claims**

1. A drive mechanism for driving at least one nuclear reactor control absorber (3), the mechanism (1) including:

   - at least one electric motor (5) of the stepping type including a stator (7) having at least first, second and third phases (17, 19, 21) and a rotor (9);
   - an electric power supply (11), electrically connected to each of the first, second and third phases (17, 19, 21) of the stator (7);
   - a controller (13) of the electric power supply (11), programmed so that the electric power supply (11) delivers electric pulses to each of the first, second and third phases (17, 19, 21) at a current frequency, each electric pulse forming a control step with a shape adapted to the control of the motor, the rotor (9) being moved per unit of time by a number of rotation steps depending on said frequency;
   - a kinematic chain (15) arranged to couple the rotor (9) to the control absorber (3), the kinematic chain (15) being arranged to convert a rotational movement of the rotor (9) into a translational movement of said control absorber (3) in the core of the reactor, with no possibility of slipping;

   the drive mechanism (1) including a device (35) for monitoring a potential situation of increased to overspeed of the absorber (3)
   **characterized in** the monitoring device (35) includes at least two mutually independent monitoring units (37, 39, 41), each connected to the terminals of one of the first, second and third phases (17, 19, 21), each monitoring unit (37, 39, 41) being configured to:

   - measure the number of control steps delivered to said phase (17, 19, 21) during a time window (Tobs) of preset duration or the number of rotation steps of the rotor (9) during a time window (T'obs) of preset duration;
   - compare the number of measured control steps with a preset maximum (Nmax) or the number of measured rotation steps with a preset maximum (N'max).

2. The drive mechanism according to claim 1, **characterized in that** the monitoring device (35) includes at least first, second and third mutually independent monitoring units (37, 39, 41), connected to the terminals of the first, second and third phases (17, 19, 21), respectively,
   the first unit (37) and the second unit (39) each being configured to measure the number of control steps during the time window (Tobs) of preset duration, and to cut off the electric power supply (11) if the preset maximum (Nmax) is exceeded,
   the third unit (41) being configured to measure the number of rotation steps of the rotor during the time window (T'obs) of preset duration, and to cut off the electric power supply (11) if the preset maximum (N'max) is exceeded.

3. The drive mechanism according to claim 2, **characterized in that** the first and second units (37, 39) each comprise at least one of the following circuits:

   * a logic circuit configured to count the number of electric pulses respectively delivered to the first phase (17) or the second phase (19);
   * an analog circuit configured to count the number of electric pulses respectively delivered to the first phase (17) or the second phase (19);
   * a logic or analog circuit for comparing electric pulses respectively delivered to the first phase (17) or the second phase (19) with a preset profile.

4. The drive mechanism according to any one of claims 2 to 3, **characterized in that** the third unit (41) is configured to detect the crossing of a rotation step by the rotor by impedance measurement across the terminals of the third phase (21) of the stator (7).

5. The drive mechanism according to claim 4, **characterized in that** the monitoring device (35) includes, in addition to the first and second monitoring units (37, 39), a first and/or second measuring unit (93, 95) configured to measure an impedance across the terminals of the first or second phase (17, 19), respectively, and a unit (91) using the impedance measurement across the terminals of at least two of the first, second and third phases (17, 19, 21) to determine the position of the absorber (3).

6. The drive mechanism according to any one of claims 2 to 5, **characterized in that** the first, second and third units (37, 39, 41) are configured to cut off the electric power supply (11) by respectively acting on first, second and third mutually independent switches (33, 25, 27) if the number of control steps or the number of rotation steps exceeds the corresponding preset maximum (Nmax, N'max).

7. The drive mechanism according to any one of the preceding claims, **characterized in that** the kinematic chain (35) is configured so that the maximum number (Nmax, N'max) of electric pulses or rotation steps drives a reactivity contribution below an anti-reactivity limit ($\beta$) excluding a preset prompt criticality accident of the reactor, minus a margin preset by safety analyses.

8. The drive mechanism according to any one of the preceding claims, **characterized in that** the kinematic chain (15) provides position maintenance even upon cutoff of the power supply of the motor.

9. A method for monitoring a potential situation of increase to overspeed of a nuclear reactor control absorber (3) equipped with a drive mechanism (1) of said control absorber (3) including:

- at least one electric motor (5) of the stepping type including a stator (7) having at least first, second and third phases (17, 19, 21) and a rotor (9);
- an electric power supply (11), electrically connected to each of the first, second and third phases (17, 19, 21) of the stator;
- a controller (13) of the electric power supply (11), programmed so that the electric power supply (13) delivers electric pulses to each of the first, second and third phases (17, 19, 21) at a current frequency, each electric pulse forming a control step with a shape adapted to the control of the motor, the rotor (9) being moved per unit of time by a number of rotation steps depending on said frequency;
- a kinematic chain (15) arranged to couple the rotor (9) to the control absorber (3), the kinematic chain (15) being arranged to convert a rotational movement of the rotor (9) into a translational movement of said absorber (3) in the core of the reactor, with no possibility of slipping;

the method including at least two mutually independent monitoring steps, each monitoring step including the following operations:

- measuring, across the terminals of one of the first, second and third phases (17, 19, 21), the number of control steps delivered to said phase during a time window (Tobs) of preset duration or the number of rotation steps of the rotor (9) during a time window (T'obs) of preset duration;
- compare the number of measured control steps with a preset maximum (Nmax) or the number of measured rotation steps with a preset maximum (N'max).

10. The monitoring method according to claim 9, **characterized in that** the monitoring method includes:

- first and second monitoring steps during which the number of control steps respectively delivered to the first and second phases (17, 19) during the time window (Tobs) of preset duration is measured across the terminals of said phase, the electric supply (11) being cut off if the preset maximum (Nmax) is exceeded.
- a third monitoring step during which the number of rotation steps of the rotor (9) during the time window (T'obs) of preset duration is measured across the terminals of the third phase, the electric supply being cut off if the preset maximum (N'max) is exceeded.

11. The monitoring method according to claim 10, **characterized in that**, in the first and second monitoring steps, the number of control steps respectively delivered to the first phase (17) and the second phase (19) is counted by detecting the voltage edges or the current edges.

12. The method according to any one of claims 10 to 11, **characterized in that**, in the third monitoring step, the number of rotation steps of the rotor (9) is counted by measuring an impedance across the terminals of the third phase (21).

13. The monitoring method according to claim 12, **characterized in that** the method includes, in addition to the first and second monitoring steps, a first and/or second measuring step during which, respectively, the number of rotation steps of the rotor (9) is counted by measuring an impedance across the terminals of the first and second phase (17, 19), the method including a step for determining the position of the absorber (3) using the impedance measurement across the terminals of at least two of the first, second and third phases (17, 19, 21).

14. The monitoring method according to any one of claims 10 to 13, **characterized in that** during the first, second and third steps, the electric supply of the electric motor (5) is cut off by respectively acting on first, second and third mutually independent switches (33, 25, 27) if the number of electric pulses or the number of rotation steps exceeds the corresponding preset maximum (Nmax, N'max).

15. The monitoring method according to any one of claims 9 to 14, **characterized in that** the kinematic chain (15) is configured so that the maximum number (Nmax, N'max) of electric pulses or rotation steps drives a reactivity contribution below an anti-reactivity limit ($\beta$) excluding a preset prompt criticality accident of the reactor, minus a margin preset by safety analyses.

FIG.1

FIG.2

a)

b)

FIG.3

FIG.4

FIG.5

FIG.6

FIG.7

EP 3 443 560 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012148007 A
- JP H05312982 B
- US 4777010 A